# FASCICULE DE BREVET EUROPEEN

(11) **EP 1 087 240 B1**
(45) Date de publication et mention de la délivrance du brevet: **26.11.2003**
(21) Numéro de dépôt: 00402552.4
(22) Date de dépôt: 15.09.2000
(51) Int. Cl.: G01V 1/22, G01V 1/26

(54) **Méthode et système de transmission standard, pour relier entre eux des éléments d'un dispositif sismique**
Verfahren und System der Standard-Übertragung zur Verbindung von Elementen einer seismischen Vorrichtung
Method and system of standard transmission for linking together the elements of a seismic device

(30) Priorité: 27.09.1999 FR 9912113
(43) Date de publication de la demande: 28.03.2001
(73) Titulaire: Institut Français du Pétrole, 92852 Rueil-Malmaison Cedex (FR)
(72) Inventeur: Bary, Rénate, 92500 Rueil Malmaison (FR); Guion, Michel, 92800 Puteaux (FR)

(56) Documents cités:
- FR-A- 2 538 194
- FR-A- 2 720 518
- FR-A- 2 770 732

## Description

La présente invention concerne une méthode et un système de transmission qui utilisant un réseau de transmission standard, pour relier entre eux des éléments d'un dispositif sismique, permettant de transmettre avec précision un signal indicatif d'un instant de référence.

Le système de transmission selon l'invention peut trouver des utilisations dans de nombreux domaines où l'on a à synchroniser entre elles des stations éloignées sans pour cela utiliser nécessairement des moyens de communication dédiés.

C'est le cas dans le domaine de la prospection sismique où l'on enregistre les signaux reçus par des récepteurs sismiques répartis à la surface du sol par exemple, renvoyés par les discontinuités du sous-sol en réponse à l'émission d'ondes sismiques par une source vibratoire ou impulsionnelle. On utilise des ensembles de collecte de données sismiques comprenant un grand nombre d'unités d'acquisition réparties sur le site exploré, adaptées à collecter (amplifier, filtrer, numériser et mémoriser) les signaux. Les données mémorisées sont transmises à une station centrale de commande et d'enregistrement depuis chaque unité d'acquisition à intervalles fixes (par exemple après chaque cycle d'émission-réception, à l'issue de chaque session journalière, etc.) ou « au fil de l'eau », dès qu'un intervalle de temps de transmission est disponible, soit directement soit par l'intermédiaire de stations intermédiaires ou concentrateurs. Des systèmes d'acquisition sismique sont décrits par exemple dans les brevets FR 2 511 772 (US 4 583 206) ou FR 2 538 194 (US 4 628 494), FR 2 692 384 (US 5 550 787), FR 2 696 839 (US 5 706 250), FR 2 710 757 (US 5 563 847), FR 2 720 518 (US 5 822 273), FR 2 766 580.

Il importe que toutes les unités d'acquisition réparties sur le site exploré puissent se synchroniser sur un instant de référence commun, généralement l'instant de déclenchement de la source sismique, ceci quel que soit leur éloignement par rapport à la station centrale qui leur transmet le signal indicatif et quelle que soit la voie de transmission utilisée à cet effet, faute de quoi les combinaisons des données centralisées sont rendues très imprécises.

On connaît des méthodes et dispositifs permettant un recalage parfait en temps de stations éloignées sur une station centrale communiquant par le biais de voies de communication, dès l'instant que l'on a pu mesurer le temps de propagation des signaux sur ces voies.

Par le brevet FR 2.538.194 (US 4,628,494) du demandeur par exemple, on connaît une méthode pour synchroniser l'acquisition de signaux sismiques par une unité d'acquisition sur le terrain, avec un instant de référence tel que l'instant de déclenchement d'une source sismique dans le cas où l'on connaît la durée de propagation Δt jusqu'à elle du signal indicatif de cet instant, par une voie de transmission telle qu'un câble ou un canal radio. La méthode consiste essentiellement à envoyer un pré-signal lançant l'acquisition des signaux issus des récepteurs sismiques et leur mémorisation dans une mémoire locale. Quand le signal de référence- émis postérieurement est reçu à l'unité d'acquisition à un instant t, on va rechercher dans la mémoire locale tous les échantillons mémorisés depuis l'instant (t - Δt) i.e. l'instant de référence.

Par la-demande brevet FR 98/15.792, on connaît une méthode et un dispositif permettant également de produire pour chaque signal sismique, une série d'échantillons de ces signaux, rééchelonnée depuis un instant de référence, à partir d'une première série d'échantillons numérisés de ce signal sismique produits depuis un instant initial quelconque antérieur à l'instant de référence, connaissant l'écart de temps effectif entre ces deux instants. La méthode comporte la détermination de coefficients d'un filtre numérique propre à compenser la partie fractionnaire de l'écart de temps effectif mesuré, et l'application de ce filtre numérique de compensation à la première série d'échantillons, permettant d'obtenir une série d'échantillons numérisés rééchelonnée depuis l'instant de référence.

Cependant, ces techniques de repérage et de recalage connues ne sont applicables que si on connaît avec une égale précision le temps de propagation de signaux de référence au travers les stations émettrices et réceptrices en raison du fait que la gestion des transferts est assurée par voie logicielle, notamment dans le cadre d'une gestion multi-tâches, surtout si l'on considère que l'incertitude sur le temps de propagation effectif dans un système de transmission sismique tel que ceux évoqués plus haut par exemple ne doit pas dépasser quelque 100 µs.

La transmission sans décalage de temps plus ou moins aléatoire est possible et plus facile à mettre en oeuvre quand on est propriétaire du réseau que l'on utilise et maître de la forme des signaux émis ainsi que du mode de codage. Lorsque le signal TB marquant l'instant effectif d'émission par la source arrive dans la station centrale, il est possible par des circuits adaptés, d'injecter ce signal directement sur la voie de communication qui la relie à la station réceptrice et d'échapper à d'éventuels retards non constants apportés par l'informatique de gestion des stations à la prise en compte.

Les réseaux de communication standards sont avantageux. Ils permettent des transmissions à débit élevé, ils sont relativement simples à utiliser et évolutifs. Mais ils fonctionnent suivant un protocole de communication particulier avec des circuits de contrôle et de commande spécialisés auxquels ils faut s'adapter si l'on veut transmettre avec précision des signaux représentatifs d'instants de référence.

### La méthode et le système selon l'invention

La méthode de transmission selon l'invention permet l'utilisation d'un réseau standard de communication pour transférer des données de synchronisation entre une première station de commande et une deuxième station distante en évitant toute incertitude sur le temps de propagation effectif de signaux de référence entre les stations communiquantes.

La méthode de transmission selon l'invention permet de relier entre eux, par des voies de transmission, les éléments d'un dispositif sismique comprenant des unités locales d'acquisition, de traitement et de transmission de données sismiques, une station centrale de commande et d'enregistrement et au moins une station locale intermédiaire de contrôle et de concentration, les éléments du dispositif étant pourvus d'ensembles de contrôle multi-tâches (tels que des micro-ordinateurs programmés), la méthode permettant une synchronisation préeise des unités locales avec un signal de référence émis par la station centrale (un signal concomitant au déclenchement d'une source sismique par exemple).

### La méthode comporte :

- l'utilisation d'un réseau de transmission (de préférence un réseau local (de type Ethernet™ ou autre) fonctionnant suivant un protocole de transmission particulier, pour interconnecter la station centrale et au moins une station terminale (les stations locales intermédiaires ou éventuellement les unités d'acquisition de terrain pour les configurations où le réseau se prolongerait jusqu'à elles) ;
- la mesure préalable du temps de transit (durée de propagation) des données sur les voies de transmission entre la station centrale et les unités d' acquisition ;
- le prédéclenchement de l'acquisition des données sismiques par les unités d'acquisition, l'intervalle de temps de garde par rapport à l'instant de réception du signal de référence étant fixe et supérieur au temps de transit ; et
- l'application au signal de référence dans la station terminale, d'un retard de compensation ajusté tenant compte des fluctuations du temps de transfert effectif liées à son passage par les moyens de contrôle multi-tâches de la station terminale et le réseau local, pour respecter cet intervalle de temps de garde.

Suivant un premier mode de mise en oeuvre, (solution purement matérielle) la méthode comporte :
- la détection directe dans la station centrale du signal de référence ;
- la formation à partir du signal de référence détecté d'une trame caractéristique et son application directe au module d'interface de la station centrale ; et
- la détection par un module d'interface de chaque station terminale, de la trame caractéristique du signal de référence arrivant par la voie de transmission ; et
- l'application au signal de référence dans la station terminale, d'un retard de compensation adapté au dit intervalle de temps de garde.

Suivant un deuxième mode de mise en oeuvre, (solution mixte matérielle-logicielle) la méthode comporte :
- la détection directe du signal de référence et l'émission d'un signal codé (une trame) vers la station terminale par le réseau local ;
- la mesure d'un écart de temps séparant la prise en compte du signal de référence par les moyens de contrôle multi-tâches de la station centrale et sa transmission effective sur le réseau local sous la forme du signal codé ;
- la transmission de la valeur de cet écart de temps sous la forme d'une deuxième trame (signal codé) ; et
- l'application au signal de référence dans la station terminale, d'un retard de compensation ajusté en fonction de cet écart de temps pour respecter le dit intervalle de temps de garde.

La méthode est particulièrement souple en ce qu'elle permet, par le biais d'une compensation ajustable en temps de délais de transmission, de prendre en compte facilement la diversité des débit de transfert de données des voies de transmission disponibles dans un système de transmission complexe comme on en utilise par exemple dans les dispositifs de prospection sismique modernes.

Le système de transmission selon l'invention permet de relier entre eux par des voies de transmission, des éléments d'un dispositif sismique, comprenant des unités locales d'acquisition, de traitement et de transmission de données sismiques, une station centrale de commande et d'enregistrement et au moins une station locale de contrôle et de concentration, les éléments du dispositif étant pourvus d'ensembles de contrôle multi-tâches. Il permet une synchronisation précise des unités locales avec un signal de référence émis par la station centrale (signal concomitant au déclenchement d'une source sismique par exemple).

Le système comporte :
- un réseau de transmission, de préférence un réseau local (de type Ethernet ou autre) fonctionnant suivant un protocole de transmission particulier, pour interconnecter la station centrale et au moins une station terminale (les stations locales intermédiaires ou éventuellement les unités d'acquisition de terrain au cas où le réseau se prolonge jusqu'à elles) comportant au moins une voie de transmission dont le délai de transmission est connu, associée à des modules d'interface dans la station centrale et chaque station terminale, adaptés à respecter le dit protocole de transmission particulier ;
- des moyens de mesure du temps de transit (temps de propagation) des données sur chacune des voies de transmission que l'on compte utiliser entre la station centrale et les unités d'acquisition ;
- des moyens de prédéclenchement de l'acquisition des données sismiques par les unités d'acquisition, avec un intervalle de temps de garde par rapport à l'instant de réception du signal de référence, qui est fixe et supérieur au temps de transit ; et
- des moyens d'application au signal de référence d'un retard ajusté pour tenir compte des fluctuations du temps de transfert effectif liées à son passage par les dits moyens de contrôle multi-tâches (dans les « couches » logicielles des processeurs programmés) et le réseau local, ce retard étant adapté en fonction du débit effectif (mesuré au moment de l'installation du dispositif sur le terrain) de chaque voie de transmission utilisée.

Cette combinaison d'un temps de garde fixe appliqué par toutes les unités d'acquisition et de moyens d'ajustement intermédiaires de retard adaptés à compléter les temps de propagation connus et mesurés sur les voies de transmission, par un retard complémentaire tenant compte des fluctuations des temps de gestion informatique, permet à toutes les unités d'acquisition de se caler toutes ensemble sur un même instant de référence.

Le temps de transmission par le réseau étant connu avec précision, il est possible en outre de combiner un tel réseau avec des voies de transmission dédiés classiques par fibre optique, radio ou câble, tout en préservant le synchronisme parfait entre ces différentes voies.

D'autres caractéristiques et avantages de la méthode et du système selon l'invention, apparaîtront à la lecture de la description ci-après d'un exemple non limitatif de réalisation, en se référant aux dessins annexés où :
- la Fig.1 montre schématiquement un dispositif sismique positionné sur le terrain avec différentes possibilités de voies de transmission entre les éléments ;
- la Fig.2 montre schématiquement une station locale RRS de concentration ;
- la Fig.3 montre schématiquement la station centrale générale CCU ;
- la Fig.4 montre schématiquement un module de concentration DCU à l'intérieur d'une station locale RRS ;
- la Fig.5 est un schéma synoptique illustrant le déroulement dans la station centrale CCU, des opérations d'émission du signal de référence TB, dans un premier mode de mise en oeuvre (solution purement matérielle) ;
- la Fig.6 est un schéma synoptique illustrant le déroulement, dans une station locale RRS, des opérations de réception et d'ajustement de retard du signal de référence TB, dans le premier mode de mise en oeuvre ;
- la Fig.7 est un schéma synoptique analogue à celui de la Fig.5 illustrant le déroulement dans la station centrale CCU, des opérations d'émission du signal de référence TB mais adapté à une solution mixte matérielle-logicielle ;
- la Fig.8 est un schéma synoptique, analogue à celui de la Fig.6, illustrant le déroulement, dans une station locale RRS, des opérations de réception et d'ajustement de retard du signal de référence TB, dans le deuxième mode de mise en oeuvre (solution mixte) ;
- la Fig.9 montre schématiquement un circuit d'interface TBI adaptable selon les cas à la détection ou à la génération d'une trame caractérisant le signal de référence ; et
- la Fig.10 est un synoptique général de gestion logicielle des fonctions remplies par une station locale.

### DESCRIPTION

La méthode et le système selon l'invention va être décrite dans le cadre particulier d'une application à un dispositif de prospection sismique, déjà décrit notamment dans les brevets FR 2 692 384 (US 5 550 787), FR 2 696 839 (US 5 706 250), FR 2 720 518 (US 5 822 273) du demandeur.

### I) Dispositif sismique

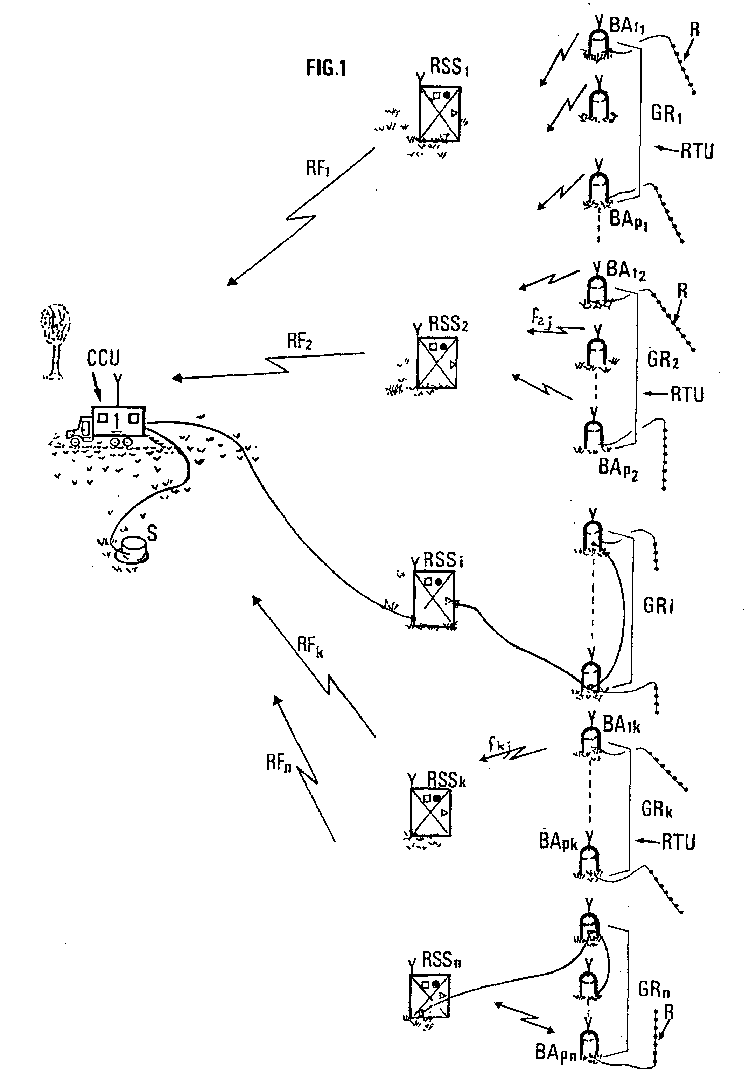

Le dispositif sismique comporte (Fig.1) un ensemble souvent considérable (de plusieurs centaines à plusieurs milliers) de récepteurs sismiques R produisant chacun une "trace sismique" en réponse à la transmission dans le sol d'ondes sismiques produites par une source S couplée avec le sol et renvoyées par des discontinuités du sous-sol. Les récepteurs R sont subdivisés en n groupes GR1, GR2, ..., GRn. comprenant chacun un certain nombre q de récepteurs R. Des unités locales d'acquisition et de transmission RTU référencées BA11, ... BAp1, ... BApk, ... BApn analogues par exemple à celles décrites dans le brevet FR 2 720 518 (US 5 822 273), sont placées sur le terrain, chacune pour numériser et mémoriser temporairement les données sismiques recueillies par un ou plusieurs récepteurs R de chaque groupe. Un groupe quelconque GRk d'ordre k par exemple, comporte un certain nombre q de récepteurs connectés respectivement à p unités d'acquisition locales RTU référencées BA1k, BApk par exemple. Les nombres p et q peuvent être différents si une partie au moins des unités locales RTU (BAp2 par exemple sur la Fig.1) est chargée de collecter les données sismiques issues de plus d'un récepteur sismique R. Le dispositif sismique peut ainsi comporter par exemple plusieurs centaines d'unités locales RTU.

Les différents groupes d'unités d'acquisition RTU sont respectivement sous le contrôle de stations locales RRS de contrôle et de concentration référencées RRS1, RRS2 ...RRSi,... RRSk, ... RRSn. Ces stations locales sont équipées pour réaliser des fonctions étendues :
- contrôler les unités d'acquisition RTU de leurs groupes respectifs ;
- collecter les données sismiques (traces sismiques) des différentes unités RTU, les stocker sur une mémoire de masse (un ou plusieurs disques par exemple) ;
- transférer sur commande à la station centrale CCU au moins une partie des données stockées : soit des paramètres indicatifs du bon fonctionnement des unités d'acquisition ou des stations locales (RRS), soit une partie au moins éventuellement compressée de chaque trace sismique, dans le but d'effectuer un contrôle de qualité ;
- gérer des opérations de test et d'initialisation sur les moyens de liaison (lignes ou canaux hertziens) ainsi que sur les équipements de terrain (récepteurs sismiques, électronique dans chaque unité d'acquisition RTU), surveiller le bon déroulement d'opérations sismiques, et rendre compte sur commande des résultats et des anomalies éventuelles.

Les différents concentrateurs RRS, comme la source S, sont placés sous le contrôle d'une station centrale de pilotage et d'enregistrement CCU où sont finalement regroupées toutes les données sismiques. Les stations locales RRS communiquent avec la station centrale CCU par un réseau local LAN d'un type connu (Ethernet™ par exemple) comportant des liaisons matérielles (câble ou fibre optique L) ou des liaisons radio RF₁, RF₂, ... RFₙ, ce réseau fonctionnant suivant un protocole de transmission propre.

### II) Stations locales de contrôle et concentration (RRS)

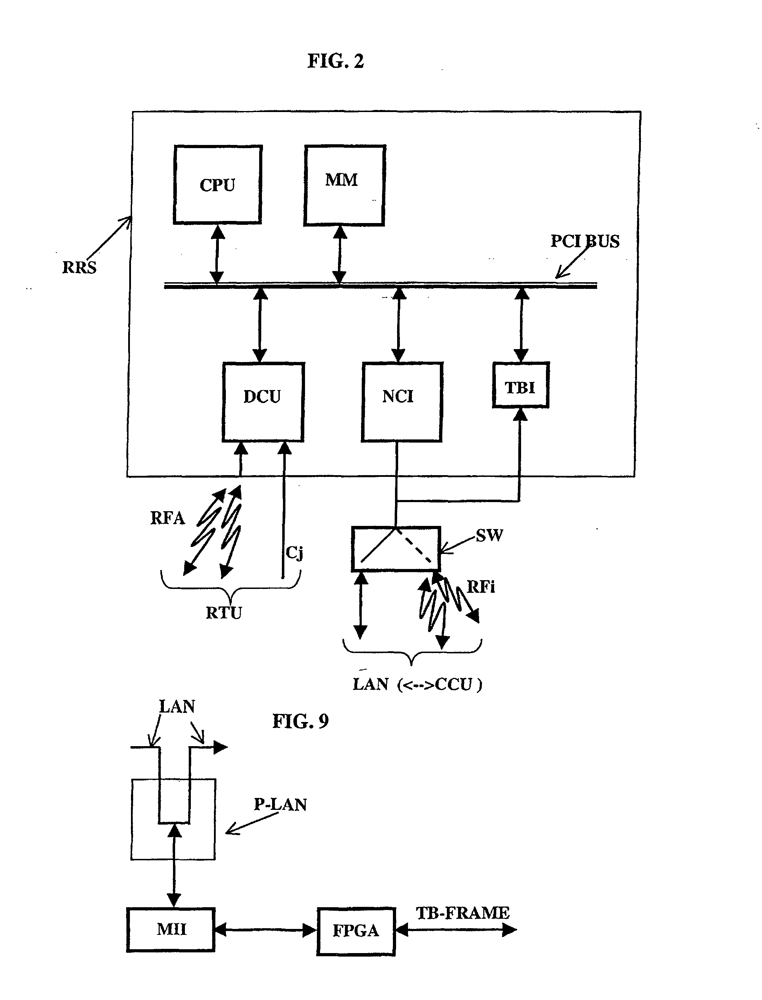

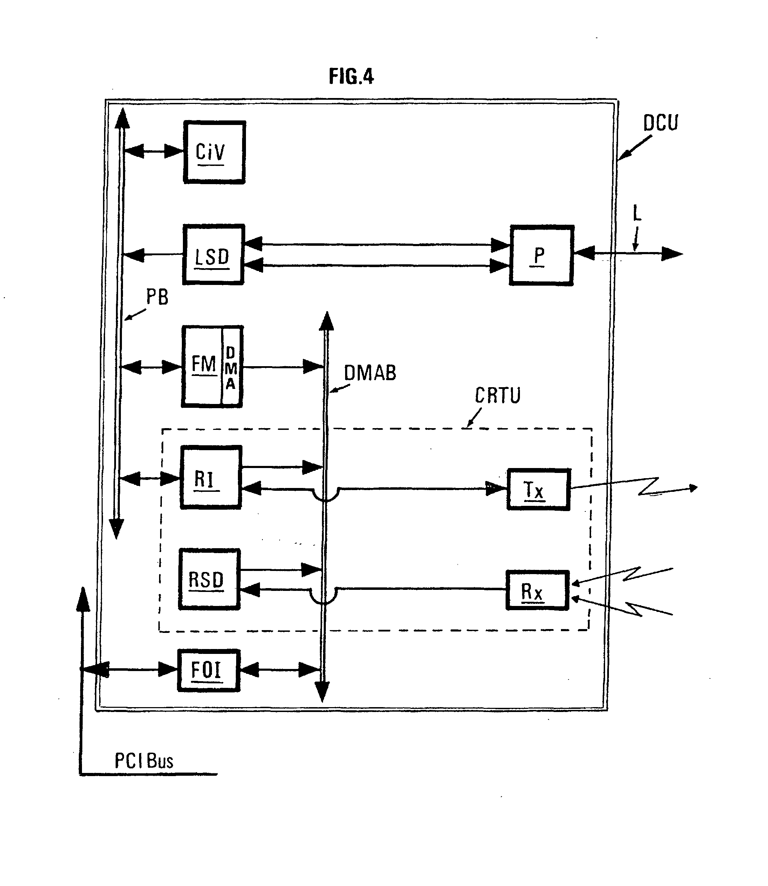

Chaque station locale RRS comporte (Fig.2) une unité centrale CPU avec une mémoire RAM étendue (32 Mo par exemple), communiquant par un bus interne PCIBUS avec une mémoire de masse MM de plusieurs Go, et une unité de concentration DCU (cf. Fig.4) affectée à gérer les communications de chaque station locale RRS avec les unités locales RTU d'acquisition soit par canaux hertziens Fₖⱼ, et/ou par câbles ou lignes de transmission Ci.

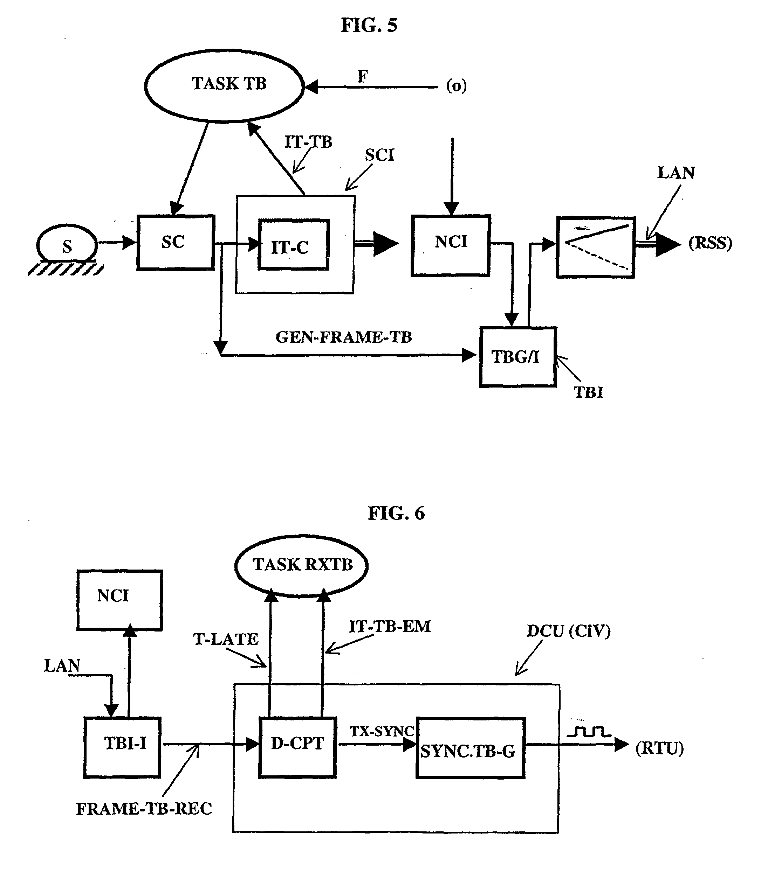

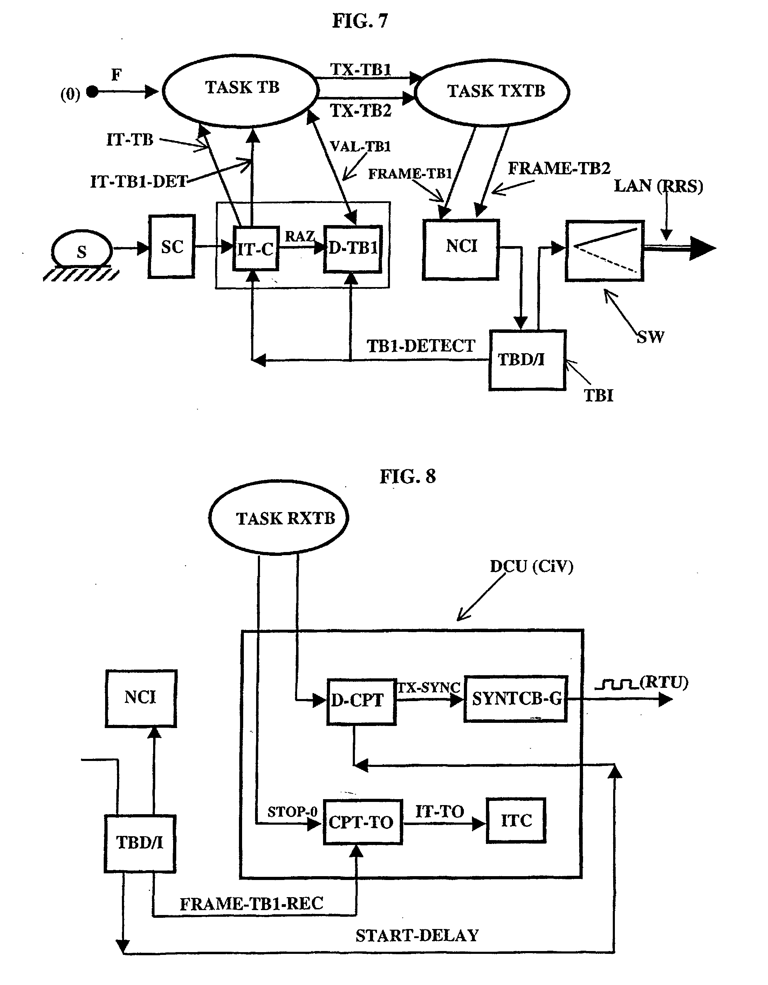

Sur le bus PCIBUS, est également connecté un ensemble d'interface NCI. Le réseau LAN comprenant une ou plusieurs lignes L et/ou des voies de transmission radio RFB, utilisé pour la communication avec l'unité centrale CCU, est connecté à l'ensemble d'interface NCI par l'intermédiaire d'un commutateur de voies SW.Une interface TBI de détection sur le réseau LAN des signaux indicatifs de l'instant initial de déclenchement de la source sismique S, est connecté à l'ensemble d'interface NCI d'une part et au bus PCIBUS. Les fonctionnalités des éléments NCI et TB/I seront décrites plus avant en relation avec les Fig.6 et 8.

### III) Station centrale de commande CCU

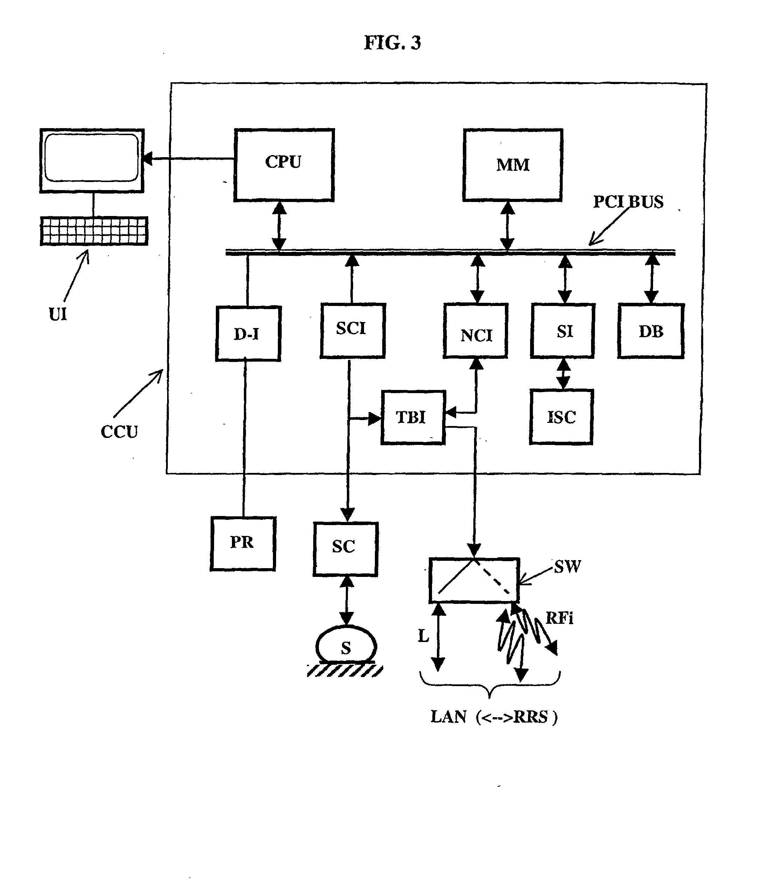

La station centrale CCU (Fig.3) comporte elle aussi une unité centrale CPU pourvue d'une mémoire RAM étendue communiquant par un bus interne PCIBUS avec une mémoire de masse MM de forte capacité suffisante pour enregistrer les traces sismiques transmises par les unités d'acquisition via les unités de commande et de concentration RRS. Elle comporte également un terminal local de dialogue UI pour les interventions de l'opérateur; une imprimante PR permettant de tracer avec une haute définition des coupes sismiques, des cartographies, etc., qui est reliée au bus PCIBUS par une carte d'interface DI. Une mémoire de masse de grande capacité DB pour mémoriser une base de données constituée avec des données sismiques, géographiques etc., également connectée au bus PCIBUS. A ce même bus, par l'intermédiaire d'un élément d'interface SI, est connecté un scanner d'images ISC utilisé pour entrer dans la base de données de la mémoire DB éventuellement une carte de géographie de la zone où l'on effectue les opérations sismiques. Une telle image de la zone d'opérations peut être utilisée pour faire correspondre les points d'implantation des capteurs de terrain avec des coordonnées géographiques précises.

La source sismique S est contrôlée par un boîtier de commande SC, formant, à son déclenchement, un signal indicatif TB qui est appliqué à l'unité centrale CCU par l'intermédiaire d'une carte d'interface SCI.

Sur le bus PCIBUS, est également connecté un ensemble NCI d'interface adaptée spécifiquement au contrôle du réseau LAN. Le réseau local LAN (lignes L et/ou voies de transmission radio Rfi) utilisé pour les liaisons avec chaque station locale RRS, est connecté à l'ensemble d'interface NCI par l'intermédiaire d'un commutateur de voies SW. Un circuit d'interface TBI est interposé en dérivation entre les éléments d'interface NCI et SCI. Les fonctionnalités des éléments NCI et TBI seront également décrites plus avant en relation avec les Fig.6 et 8.

Le module de concentration DCU de chaque station locale RRS (Fig.4), est destiné à relayer la transmission des commandes de l'unité de commande CPU vers les stations locales RRS et en sens inverse, la réception des données sismiques. Il comporte deux cartes électroniques. Une première carte porte un ensemble CiV dont les fonctions seront précisés en relation avec les Fig.6, 8, un circuit de détection synchrone de ligne LSD qui communique par des ports d'entrée/sortie P avec une ou plusieurs lignes de transmission Ci pour la communication avec les unités d'acquisition RTU sur le terrain (Fig.1). Une deuxième carte porte des modules de mémoires FM avec DMA, accessibles par l'intermédiaire d'un bus interne DMAB. Le circuit d'interface FOI permet des échanges entre le bus d'échange DMAB et l'unité centrale CPU (Fig.2) par l'intermédiaire du bus PCIBUS. Les trois premières cartes CPU, LSD, FM communiquent par un bus interne PB.

Chaque unité de concentration DCU comporte une unité d'émission-réception radio CRTU, analogue à celle décrite dans le brevet précité FR 2 720 518 (US 5 822 273), qui est adaptée, quand ce mode de liaison est établi, à établir des communications par voie hertzienne avec les unités locales RTU. Cette unité CRTU comporte (Fig.4) un circuit d'interface RI connecté au bus d'échange DMAB, au bus interne PB et à un transmetteur radio Tx émettant par exemple suivant le mode TFM (Tamed Frequency Modulation) bien connu des spécialistes et un circuit de détection synchrone de modulations hertziennes RSD, connecté à un récepteur de radio Rx.

### IV) Programmation des activités par tâches

Comme décrit dans le brevet FR 2 720 518 (US 5 822 273) précité, les différentes activités permettant le bon déroulement des processus, sont fractionnées en tâches répertoriées, dédiées chacune à un processus spécifique, qui se présentent chacune sous la forme de programmes intégrés aux ordinateurs dans la station centrale CCU 1, dans les stations locales RRS et les unités locales RTU.

Les tâches peuvent être réalisées en séquence ou bien mises en concurrence par des commutations. Un programme de répartition en temps réel gère le lancement ou l'interruption des tâches en tenant compte de leurs degrés de priorité respectifs ou leur reprise quand elles ont été interrompues a) faute de disposer à un instant de leur exécution de toutes les données nécessaires, ou b) à la réception d'un message d'interruption issu d'une autre tâche ou bien c) consécutif à un événement extérieur.

Pour définir une tâche, on tient compte de sa fonction, de toutes les données nécessaires à son exécution, des programmes de pilotage (drivers) requis, de toutes les interruptions que la tâche impose et de son degré de priorité préétabli.

Les tâches peuvent accéder à une base de données constituée de paramètres introduites par l'opérateur, des données sismiques acquises et des paramètres de contrôle du système sismique.

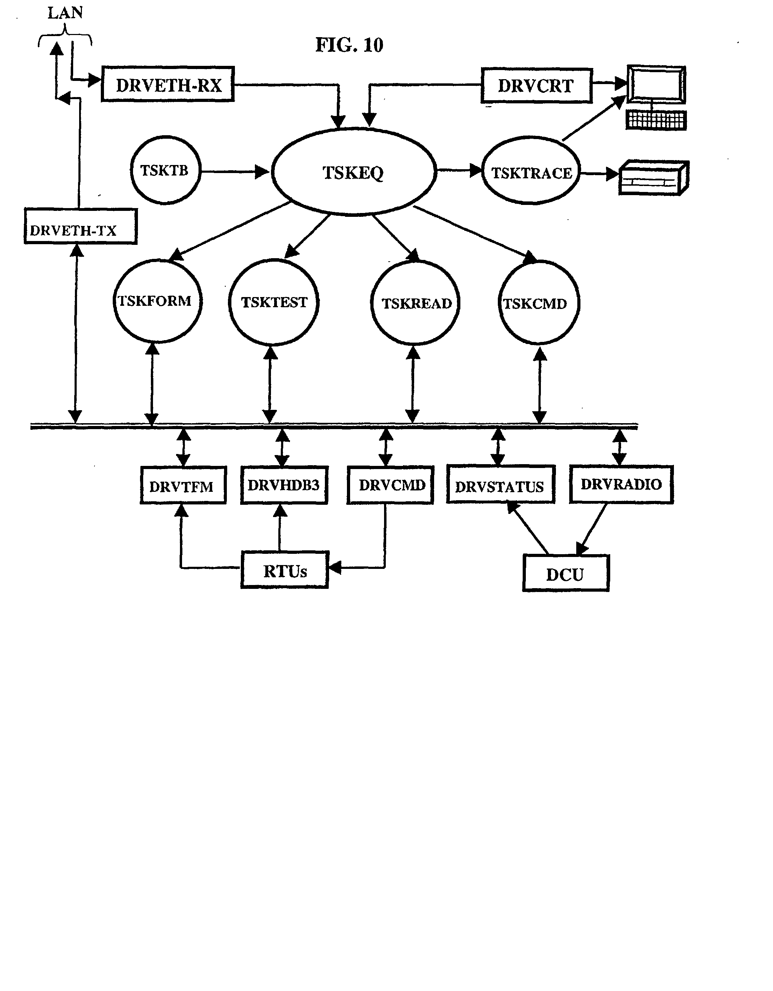

Les relations d'interdépendance des différentes tâches réalisées par chaque station locale de commande et de concentration RRS par exemple, sont représentées sur le diagramme de la Fig. 10.

### V) Transmission du signal de référence TB par le réseau local LAN.

La transmission sans retard et de manière répétitive du signal TB indicatif de l'instant précis de déclenchement de la source S (instant de « tir »), aux stations locales de concentration RRS, et de là aux unités d'acquisition RTU, est effectuée en respectant les règles de fonctionnement suivantes :
- Aucun trafic n'a lieu sur l'ensemble du réseau LAN pendant la durée de déclenchement du tir.
- Le temps de transfert effectif des signaux sur chacune des voies de transmission du réseau LAN depuis l'émission du CCU jusqu'à l'entrée au RRS, n'est pas le même selon que l'on utilise un câble, une fibre optique ou une liaison hertzienne, mais, pour chacune de ces voies, il est bien constant et reproductible. On le mesure avec précision à la connexion de chaque RRS au réseau LAN.
- L'émission du signal TB des stations locales RRS vers les unités d'acquisition RTU est retardée d'un délai fixe connu. Ce délai qui tient compte de l'ensemble des temps de transit dans le système de transmission, est connu par les unités d'acquisition RTU.
- Lorsque le signal TB est reçu par les boîtiers d'acquisition RTU, l'acquisition du signal sismique a déjà démarré auparavant sur un pré-signal de démarrage (Pré-TB). Comme déjà décrit dans le brevet FR 2 666 946 (US 5 245 647), les échantillons sismiques acquis sont rangés dans une mémoire tampon des unités d'acquisition RTU qui a une taille suffisante pour contenir tous les échantillons acquis durant un intervalle de temps entre le pré-signal et le premier des échantillons à conserver, acquis postérieurement à l'instant initial de référence.
- Cet intervalle de temps est choisi par convention supérieur au temps maximal de propagation des signaux sur les voies physiques de transmission que l'on est amené à utiliser (variable selon que l'on utilise des fibres optiques, des câbles ou des voies hertziennes) tout en restant compatible avec la taille des mémoires-tampons. Comme la durée de transmission réelle du signal de référence est susceptible de fluctuer quand on utilise, comme il est courant, des micro-ordinateurs multi-tâches, la méthode va comporter si nécessaire l'application de retards intermédiaires modulables (par utilisation de compteurs retardeurs) destinés à compléter les retards intangibles (temps de propagation mesurés une fois pour toutes au moment de l'installation du dispositif sismique sur le terrain), connus pour que toutes les unités d'acquisition RTU, soient toutes ensemble bien synchrones avec l'instant de référence à l'issue de cet intervalle de temps.

La transmission par le réseau LAN peut être effectuée soit 1) par utilisation de modules électroniques spécifiques rapportés, soit 2) par utilisation mixte de matériel et de logiciels.

### V-1 Par modules rapportés

### 1a) Dans la station centrale CCU

Le déroulement des opérations de la séquence de tir dans la station est le suivant :
- L'opérateur O déclenche le tir sismique (Fig.5) et le signal correspondant F est envoyé à une tâche TB de la station centrale CCU ;
- Un signal de pré-déclenchement est transmis par le réseau LAN vers les stations locales RRS qui le répercutent vers les unités d'acquisition RTU. A la réception de ce signal, les unités d'acquisition commencent à acquérir les signaux émanant des récepteurs sur le terrain et les rangent dans une mémoire-tampon.
- La tâche TB émet un signal qui est relayé vers la source S par son boîtier de contrôle SC, provoquant ainsi son déclenchement ;
- Cet instant de déclenchement est signalé à la station centrale CCU par un signal TB ;
- Le signal TB est envoyé à un contrôleur d'interruptions IT-C dans le module d'interface SCI, ce qui provoque l'interruption de la tâche logicielle en cours et la prise en compte quasi immédiate d'un signal d'interruption IT-TB. Le boîtier de contrôle SC produit un signal GEN-FRAME-TB. Le circuit d'interface TBI comporte un ensemble TBG/I connecté sur le réseau LAN entre l'interface de contrôle du réseau NCI et le commutateur SW et adapté à y générer une trame TB (cf. Fig.9).
- La tâche TB prend en compte le signal IT-TB pour contrôler le bon déroulement des opérations.

### 1b) Dans les stations locales RRS

L'interface TBD/I (du type décrit à la Fig.9) est connectée sur le réseau LAN entre le commutateur SW et l'interface de contrôle du réseau NCI pour détecter la trame spécifique du TB. L'ensemble DCU dans chaque station locale RRS comporte, dans l'ensemble CiV (cf. Fig.4) un compteur D-CPT de temps de retard et un générateur SYNCTB-G produisant un signal de trame synchrone au signal TB.

La tâche RXTB (Fig.6) initialise le compteur D-CPT avec le délai de retard fixe prédéterminé par calibrage, correspondant à la durée de propagation sur les voies de liaison utilisées.
- L'interface de détection de trame TB surveille le trafic sur le liaison physique pour détecter la trame TB ;
- Dès que la trame TB est détectée, l'interface TBDI émet un signal FRAME-TB-REC qui démarre le compteur D-CPT.
- La fin de comptage du compteur D-CPT provoque l'émission d'un signal TX-SYNC vers un circuit SYNCTB-G dans le DCU qui génère un signal SYNCTB qui est alors transmis effectivement vers des boîtiers d'acquisition. A l'arrêt du compteur D-CPT, un signal IT-TB-EM est émis vers la tâche RXTB pour signaler la fin de traitement du TB.
- Le DCU comporte également un compteur (non représenté) permettant de délimiter un créneau de temps à l'issue duquel si aucun signal de TB n'est détecté, on annule la procédure d'attente en cours.

### V-2 Utilisation mixte matériel-logiciel

### 2a) Dans la station centrale CCU

L'interface SCI comporte un contrôleur d'interruptions IT et un compteur de délai D-TB 1.

Le déroulement des opérations de la séquence de tir dans la station est le suivant :
- l'opérateur O déclenche (Fig.7) par un signal F une tâche TB programmée dans la station centrale CCU ;
- Cette tâche TB engendre un signal de commande qui est répercuté par son interface SC de contrôle (Fig.3) vers la source sismique S ce qui provoque son déclenchement et en même temps est signalé à la station centrale CCU par une signal TB constituant le signal servant de référence.
- Le signal TB est envoyé au contrôleur d'interruptions IT-C qui provoque l'interruption de la tâche logicielle TB en cours et la prise en compte quasi immédiate du signal IT-TB. Il envoie en même temps le signal RAZ à destination du compteur délai D-TB1, qui est mis à zéro et qui démarre le comptage du temps en microsecondes
- la tâche TASK TB envoie le message TX-TB1 à une autre tâche TASK TXTB pour demander l'émission de la trame TB 1 sur le réseau LAN, vers l'ensemble des stations locales RRS par l'intermédiaire de l'interface de contrôle du réseau NCI et du commutateur SW.
- L'interface TBD/I de détection de trame TB surveille le trafic sur le circuit de transmission entre l'interface de contrôle de réseau NCI et le commutateur SW afin d'intercepter la trame FRAME TB1 dès son passage. Il signale l'émission effective de la trame TB1 en envoyant le signal TB1-DETECT au compteur de délai D-TB1, ce qui le stoppe, et au contrôleur d'interruption IT-C qui active la tâche TB par le signal d'interruption IT-TB1-DET.
- La tâche TB lit la valeur du compteur de délai D-TB1. Cette valeur représente le temps de traitement du signal TB entre sa prise en compte à l'entrée du CCU et son émission effective sur la voie de transmission vers les stations locales RRS. La tâche TB transmet cette valeur dans le message TX-TB2 vers la tâche TXTB
- La tâche TXTB génère la trame FRAME-TB2 contenant le temps mesuré et l'envoie à l'interface de contrôle du réseau NCI pour émission vers le réseau LAN à destination des RRS.

### 2b) Dans les stations locales RRS

L'interface TBD/I de contrôle du réseau NCI est interposé sur le réseau LAN (Fig.8) pour détecter la trame spécifique du signal TB. L'ensemble CiV du DCU (cf. Fig.4) dans chaque station locale RRS comporte un compteur de temps de retard D-CPT, un générateur SYNCTB-G produisant un signal de trame synchrone au signal TB, un compteur CPT-TO et un contrôleur d'interruptions ITC.

Le déroulement des opérations de la séquence de tir dans les stations locales RRS (cf. Fig.8) est le suivant :
- Dès le début de la séquence de tir (Fig.8), l'interface de détection de trame TB surveille le trafic sur la liaison physique pour détecter la trame TB1.
- Dès que la trame TB1 est détectée, le signal FRAME-TB1-REC démarre le compteur CPT-TO qui est initialisé auparavant avec un temps légèrement supérieur au temps séparant la transmission des trames TB1 et TB2. Si la trame TB2 n'est pas reçue pendant ce délai, un signal IT-T-O est généré et qui a pour effet d'avorter la séquence de tir. En même temps, le signal START-DELAY démarre le compteur D-CPT qui a été initialisé auparavant avec le délai prédéterminé par calibrage.
- A la réception de la trame TB2, le signal FRAME-TB2 déclenche la tâche RXTB qui émet le signal STOP-T-O pour arrêter le compteur CPT-TO. Le compteur D-CPT est corrigé avec la valeur de temps de transit dans le CCU extraite de la trame TB2 en fonction du débit effectif de la voie de transmission qui va être utilisée pour ce transfert.
- La fin de comptage du compteur D-CPT provoque l'émission du signal TX-SYNC vers le dispositif de génération du signal SYNCTB-G qui est alors transmis effectivement à destination des unités d'acquisition RTU.

L'interface de génération ou de détection de trame TBI (TBG/I ou TBD/I) dans la station centrale CCU et chaque station locale RRS comporte (Fig.9) un port de branchement P-LAN adapté qui est intercalé sur le réseau LAN utilisé, permettant selon les cas de lire les signaux qui y transitent (TBD/I Fig.7 pour y détecter le passage des signaux de référence) ou d'injecter des signaux (Fig.5 TBD/I ) à émettre sur le réseau. Ce port communique par l'intermédiaire d'un circuit d'interface standardisé de type MII, avec des circuits de type connu (FPGA) comportant une mémoire et des circuits logiques programmables. Dans la mémoire on charge selon les cas une trame de signal (TB-FRAME) correspondant à celui que l'on doit détecter au passage sur le réseau ou bien à celui que l'on veut injecter sur ce même réseau.

L'organisation des tâches dans chaque station locale RRS est schématisée sur la Fig.10. Les différentes abréviations utilisées pour désigner les éléments et les tâches signifient respectivement :
DRVETII : pilote (driver) du réseau local ;
DRVCRT : pilote de console ;
TSKTB : tâche de TB ;
TSKSEQ : tâche de séquencement ;
TSKTRACE : tâche de mémorisation des traces sismiques sur une mémoire de masse ;
TSKFORM : tâche de contrôle de l'installation de l'équipement de terrain ;
TSKTEST : tâche de test ;
TSKREAD : tâche de lecture des données ;
TSKCMD : tâche d'émission des commandes ;
DRVTFM : pilote de réception radio ;
DRVHDB3 : pilote de réception sur les lignes ;
DRVCMD : pilote d'émission des commandes ;
DRSSTATUS : pilote d'état (status) ; et
DRVRADIO : pilote des liaisons radio.

On a décrit des modes de réalisation où le réseau standard LAN servait à relier la station centrale avec les stations intermédiaires. On ne sortirait pas du cadre de l'invention bien entendu et on utiliserait la même technique dans le cas où les stations terminales sur le réseau LAN seraient les unités d'acquisition RTU.

Il est bien évident également que la technique de mesure du délai de prise en compte du signal de référence TB et de compensation ajustable de retard de transmission peut être appliquée aussi si l'on utilise un réseau dit propriétaire au lieu d'un réseau standard de type LAN.

## Revendications

1. Méthode de transmission pour relier entre eux, par des voies de transmission, les éléments d'un dispositif sismique comprenant des unités locales (RTU) d'acquisition, de traitement et de transmission de données sismiques, une station centrale (CCU) de commande et d'enregistrement et au moins une station locale de contrôle et de concentration (RRS), les éléments du dispositif étant pourvus d'ensembles de contrôle multi-tâches, la méthode permettant une synchronisation précise des unités locales (RTU) avec un signal de référence (TB) émis par la station centrale (CCU), **caractérisée en ce qu'**il comporte :
- l'utilisation d'un réseau de transmission (L, RFi) pour interconnecter la station centrale et au moins une station terminale ;
- la mesure préalable du temps de transit des données sur des voies de transmission dudit réseau de transmission entre la station centrale (CCU) et les unités d'acquisition (RTU) ;
- le prédéclenchement de l'acquisition des données sismiques par les unités d'acquisition (RTU), l'intervalle de temps de garde par rapport à l'instant de réception du signal de référence (TB) étant fixe et supérieur au temps de transit ; et
- l'application au signal de référence (TB) dans la station terminale, d'un retard de compensation ajusté tenant compte des fluctuations du temps de transfert effectif liées à son passage par les moyens de contrôle multi-tâches de la dite station terminale et le réseau de transmission pour respecter le dit intervalle de temps de garde, ce retard étant adapté en fonction du débit effectif de chaque voie de transmission du dit réseau.

2. Méthode selon la revendication 1, **caractérisée en ce qu'**elle comporte la détection directe dans la station centrale (CCU) du signal de référence (TB) ;
- la formation à partir du signal de référence détecté d'une trame caractéristique et son application directe à un module d'interface (TCI) de la station centrale (CCU) ;
- la détection dans un module d'interface (TCI) de chaque station terminale, d'une trame caractéristique du signal de référence (TB) ; et
- l'application au signal de référence (TB) dans la station terminale, d'un retard de compensation adapté au dit intervalle de temps de garde.

3. Méthode selon la revendication 1, **caractérisée en ce qu'**elle comporte :
- la détection directe du signal de référence (TB) et l'émission d'une trame (TB 1) vers la station terminale par le réseau de transmission (L, RFi) ;
- la mesure d'un écart de temps séparant la prise en compte du signal de référence (TB) par les moyens de contrôle multi-tâches de la station centrale (CCU) et sa transmission effective sur le réseau de transmission (L, RFi) ;
- la transmission de la valeur de cet écart de temps sous la forme d'un deuxième signal codé (TB2) ; et
- l'application au signal de référence (TB) dans la station terminale, d'un retard de compensation ajusté en fonction de cet écart de temps pour respecter le dit intervalle de temps de garde.

4. Méthode selon l'une des revendications précédentes, **caractérisée en ce que** la dite station terminale est une station locale (RRS).

5. Méthode selon l'une des revendications précédentes, **caractérisée en ce que** la dite station terminale est une unité locale (RTU).

6. Méthode selon l'une des revendications précédentes, **caractérisée en ce que** le réseau de transmission (L, RFi) est un réseau local standard (LAN) fonctionnant suivant un protocole de transmission particulier.

7. Système de transmission pour relier entre eux par des voies de transmission, des éléments d'un dispositif sismique, comprenant des unités locales (RTU) d'acquisition, de traitement et de transmission de données sismiques, une station centrale (CCU) de commande et d'enregistrement et au moins une station locale de contrôle et de concentration (RRS), les éléments du dispositif étant pourvus d'ensembles de contrôle multi-tâches, le système permettant une synchronisation précise des unités locales (RTU) avec un signal de référence (TB) émis par la station centrale (CCU), **caractérisé en ce qu'**il comporte :
- un réseau de transmission (L, RFi), pour interconnecter la station centrale (CCU) et au moins une station terminale (RTU, RRS) comportant au moins une voie de transmission dont le délai de transmission est connu, associée à des modules d'interface (NCI) dans la station centrale et chaque station terminale, adaptés à respecter un protocole de transmission particulier ;
- des moyens de mesure du temps de transit des données sur chacune des voies de transmission entre la station centrale (SCC) et les unités d'acquisition (RTU) ;
- des moyens de prédéclenchement de l'acquisition des données sismiques par les unités d'acquisition (RTU), avec un intervalle de temps de garde par rapport à l'instant de réception du signal de référence (TB), qui est fixe et supérieur au temps de transit ; et
- des moyens d'application au signal de référence d'un retard ajusté pour tenir compte des fluctuations du temps de transfert effectif liées à son passage par les dits moyens de contrôle multi-tâches et le réseau de transmission (L, RFi), et adapté en fonction du débit effectif de chaque voie de transmission utilisée.

8. Système selon la revendication 7, **caractérisé en ce qu'**il comporte un ensemble d'interface (TBG/I) dans la station centrale (CCU) pour générer directement sur une voie de transmission vers chaque station locale (RRS) un signal codé représentatif du signal de référence, un ensemble d'interface (TBD/I) pour décoder le dit signal codé, des moyens de comptage (D-CPT) pour l'application d'un retard déterminé au signal décodé, ce retard dépendant du débit effectif de la voie de transmission utilisée pour le transfert du signal de référence et un générateur (SYNCTB-G) pour engendrer un signal (SYNCTB) synchrone au signal retardé vers les unités d'acquisition (RTU).

9. Système selon la revendication 7, **caractérisée en ce qu'**il comporte, dans la station centrale (CCU), un contrôleur d'interruptions (IT-C), des moyens logiciels pour commander l'émission d'une première trame (TB1) caractéristique du signal de référence, pour mesurer un délai séparant la détection du signal de référence et l'émission effective de la dite trame sur une voie de transmission du réseau de transmission (L, RFi) et pour transmettre une deuxième trame (TB2) indicative de la durée de cet intervalle de temps, et, dans chaque station locale (RRS), un ensemble d'interface (TBD/I) pour décoder les dites trames (TB1, TB2), des moyens de comptage (D-CPT) pour l'application d'un retard au signal décodé, un générateur (SYNCTB-G) pour engendrer un signal (SYNCTB) synchrone au signal retardé vers les unités d'acquisition (RTU) et des moyens logiciels pour commander l'application par l'intermédiaire des moyens de comptage (D-CPT), d'un retard dépendant du délai mesuré et du débit effectif de la voie de transmission utilisée pour le transfert du signal de référence.

10. Système selon l'une des revendications 7 à 9, **caractérisé en ce que** la dite station terminale est une station locale (RRS).

11. Système selon l'une des revendications 7 à 9, **caractérisé en ce que** la dite station terminale est une unité locale (RTU).

12. Système selon l'une des revendications 7 à 11, **caractérisé en ce que** le réseau de transmission (L, RFi) est un réseau local standard (LAN) fonctionnant suivant un protocole de transmission particulier.

## Patentansprüche

1. Übertragungsverfahren, um über Übertragungswege die Elemente einer seismischen Vorrichtung miteinander zu verbinden, welche lokale Einheiten (RTU) zur Erfassung, zur Verarbeitung und zur Übertragung seismischer Daten, eine zentrale Station (CCU) zur Kontrolle und Aufzeichnung und wenigstens eine lokale Station zur Kontrolle und Konzentration (RRS) umfasst, wobei die Elemente der Vorrichtung mit Multitask-Kontrollanordnungen versehen sind und das Verfahren eine genaue Synchronisation der lokalen Einheiten (RTU) mit einem von der zentralen Station (CCU) ausgesandten Bezugssignal (TB) erlaubt, **dadurch gekennzeichnet, dass** es umfasst:
a. die Verwendung eines Übertragungsnetzes (L, RFi), um die zentrale Station und wenigstens eine Terminalstation miteinander zu verbinden;
b. die vorherige Messung der Transitzeit der Daten auf den Übertragungswegen dieses Übertragungsnetzes zwischen der zentralen Station (CCU) und den Erfassungseinheiten (RTU);
c. die Vorauslösung der Erfassung der seismischen Daten durch die Erfassungseinheiten (RTU), wobei das Intervall der Schutzzeit, bezogen auf den Empfangsaugenblick des Bezugssignals (TB), fest und größer als die Transitzeit ist; und
d. die Anwendung einer Kompensationsverzögerung auf das Bezugssignal (TB) in der Terminalstation, die so eingestellt ist, dass sie Schwankungen der effektiven Überführungszeit, die mit seinem Durchgang durch die Multitask-Kontrollmittel der Terminalstation sowie das Übertragungsnetz verknüpft sind, zur Einhaltung dieses Schutzzeitintervalls berücksichtigt, wobei diese Verzögerung als Funktion des effektiven Durchsatzes jedes Übertragungsweges des Netzes ausgelegt ist.

2. Verfahren nach Anspruch 1, **dadurch gekennzeichnet, dass** es das direkte Detektieren des Bezugssignals (TB) in der zentralen Station (CCU) ;
a. die Bildung, ausgehend vom detektierten Bezugssignal, eines charakteristischen Rahmens und sein direktes Anlegen an einen Schnittstellenmodul (TCI) der zentralen Station (CCU);
b. das Detektieren eines charakteristischen Rahmens des Bezugssignals (TB) in einem Schnittstellenmodul (TCl) jeder Terminalstation; und
c. das Anlegen einer an dieses Schutzzeitintervall angepassten Kompensationsverzögerung an das Bezugssignal (TB) in der Terminalstation umfasst.

3. Verfahren nach Anspruch 1, **dadurch gekennzeichnet, dass** es umfasst:
a. das direkte Detektieren des Bezugssignals (TB) und das Aussenden eines Rahmens (TB1) zur Terminalstation hin durch das Übertragungsnetz (L, RFi);
b. das Messen einer zeitlichen Abweichung, welche die Berücksichtigung des Bezugssignals (TB) durch die Multitask-Kontrollmittel der zentralen Station (CCU) und seine effektive Übertragung auf das Übertragungsnetz (L, RFi) trennt;
c. die Übertragung des Wertes dieser zeitlichen Abweichung in Form eines zweiten codierten Signals (TB2); und
d. das Anlegen einer Kompensationsverzögerung, eingestellt als Funktion dieser zeitlichen Abweichung zum Einhalten dieses Schutzzeitintervalls, auf das Bezugssignal (TB) in der Terminalstation.

4. Verfahren nach einem der vorhergehenden Ansprüche, **dadurch gekennzeichnet, dass** die Terminalstation eine lokale Station (RRS) ist.

5. Verfahren nach einem der vorhergehenden Ansprüche, **dadurch gekennzeichnet, dass** die Terminalstation eine lokale Einheit (RTU) ist.

6. Verfahren nach einem der vorhergehenden Ansprüche, **dadurch gekennzeichnet, dass** das Übertragungsnetz (L, RFi) ein Standardlokalnetz (LAN) ist, das gemäß einem besonderen Übertragungsprotokoll arbeitet.

7. Übertragungssystem, um über Übertragungswege Elemente einer seismischen Vorrichtung miteinander zu verbinden, welche lokale Einheiten (RTU) zur Erfassung, zur Verarbeitung und zur Übertragung seismischer Daten, eine zentrale Station (CCU) zur Steuerung und Aufzeichnung und wenigstens eine lokale Station zur Kontrolle und Konzentration (RRS) umfasst, wobei die Elemente der Vorrichtung mit Multitask-Kontrollanordnungen versehen sind und das System eine genaue Synchronisation der lokalen Einheiten (RTU) mit einem von der zentralen Station (CCU) ausgesandten Bezugssignal (TB) erlaubt, **dadurch gekennzeichnet, dass** es umfasst:
a. ein Übertragungsnetz (L, RFi), um die zentrale Station (CCU) und wenigstens eine Terminalstation (RTU, RRS) miteinander zu verbinden, das wenigstens einen Übertragungsweg umfasst, dessen Übertragungsdauer bekannt ist und Schnittstellenmodulen (NCl) in der zentralen Station und jeder Terminalstation zugeordnet ist, die derart ausgelegt sind, dass ein besonderes Übertragungsprotokoll eingehalten wird;
b. Mittel zum Messen der Transitzeit der Daten auf jedem der Übertragungswege zwischen der zentralen Station (SCC) und den Erfassungseinheiten (RTU);
c. Mittel zur Vorauslösung der Erfassung der seismischen Daten durch die Erfassungseinheiten (RTU) mit einem Schutzzeitintervall, bezogen auf den Empfangsaugenblick des Bezugssignals (TB), das fest und größer als die Transitzeit ist; und
d. Mittel, um an das Bezugssignal eine Verzögerung zu legen, die so eingestellt ist, dass sie mit seinem Durchgang durch die Multitask-Kontrollmittel und das Übertragungsnetz (L, RFi) verknüpfte Schwankungen der effektiven Überführungszeit berücksichtigt, und die als Funktion des effektiven Durchsatzes jedes verwendeten Übertragungswegs ausgelegt ist.

8. System nach Anspruch 7, **dadurch gekennzeichnet, dass** es eine Schnittstellenanordnung (TBG/I) in der zentralen Station (CCU) umfasst, um direkt auf einem Übertragungsweg zu jeder lokalen Station (RRS) hin ein codiertes Signal zu erzeugen, das repräsentativ für das Bezugssignal ist, eine Schnittstellenanordnung (TBD/I) zur Decodierung dieses codierten Signals, Zählmittel (D-CPT) zur Anlegung einer bestimmten Verzögerung an das decodierte Signal, wobei diese Verzögerung vom effektiven Durchsatz des Übertragungswegs abhängt, der für die Überführung des Bezugssignals verwendet wird, und einen Generator (SYNCTB-G) zur Erzeugung eines Signals (SYNCTB) umfasst, das synchron mit dem verzögerten Signal zu den Erfassungseinheiten (RTU) hin ist.

9. System nach Anspruch 7, **dadurch gekennzeichnet, dass** es in der zentralen Station (CCU) einen Unterbrechungswächter (IT-C), Softwaremittel zur Steuerung der Aussendung eines ersten, für das Bezugssignal charakteristischen Rahmens (TB1), zum Messen einer Verzögerung, welche die Detektion des Bezugssignals und die effektive Aussendung des Rahmens auf einem Übertragungsweg des Übertragungsnetzes (L, RFi) trennt, und zum Übertragen eines zweites Rahmens (TB2) umfasst, welcher für die Dauer dieses Zeitintervalls steht, und in jeder lokalen Station (RRS) eine Schnittstellenanordnung (TBD/I) zur Decodierung dieser Rahmen (TB1, TB2), Zählmittel (D-CPT) zum Anlegen einer Verzögerung an das decodierte Signal, einen Generator (SYNCTB-G) zur Erzeugung eines Signals (SYNCTB), das synchron mit dem verzögerten Signal zu den Erfassungseinheiten (RTU) hin ist, und Software-mittel zur Steuerung der Anlegung, vermittels Zählmitteln (D-CPT), einer Verzögerung umfasst, die von der gemessenen Dauer und dem effektiven Durchsatz des Übertragungsweges abhängt, der für die Überführung des Bezugssignals verwendet wird.

10. System nach einem der Ansprüche 7 bis 9, **dadurch gekennzeichnet, dass** die Terminalstation eine lokale Station (RRS) ist.

11. System nach einem der Ansprüche 7 bis 9, **dadurch gekennzeichnet, dass** die Terminalstation eine lokale Einheit (RTU) ist.

12. System nach einem der Ansprüche 7 bis 11, **dadurch gekennzeichnet, dass** das Übertragungsnetz (L, RFi) ein Standardlokalnetz (LAN) ist, das gemäß einem besonderen Übertragungsprotokoll arbeitet.

## Claims

1. Method of transmission for interlinking by transmission channels the elements of a seismic device comprising local units (RTU) for acquisition, processing and transmission of seismic data, a central station (CCU) for control and recording and at least one local station for controlling and concentration (RRS), the elements of the device being provided with multi-tasking controlling means, the method permitting precise synchronisation of the local units (RTU) with a reference signal (TB) transmitted by the central station (CCU), ***characterised in that*** it comprises:
- use of a transmission network (L, RFi) for interconnecting the central station and at least one terminal station;
- prior measurement of the transit time of the data over transmission channels of said transmission network between the central station (CCU) and the acquisition units (RTU);
- pre-initiation of the acquisition of the seismic data by the acquisition units (RTU), the hold time slot in relation to the moment of reception of the reference signal (TB) being fixed and greater than the transit time, and
- application to the reference signal (TB) in the terminal station of an adjusted compensating delay taking account of the fluctuations in the effective transfer time associated with its passage through the multi-tasking controlling means of said terminal station and the transmission network to conform to said hold time slot, this delay being adapted as a function of the effective capacity of each transmission channel of said network.

2. Method according to claim 1, ***characterised in that*** it comprises direct detection of the reference signal (TB) in the central station (CCU);
- formation of a characteristic frame from the detected reference signal and direct application thereof to an interface module (TCI) of the central station (CCU);
- detection of a characteristic frame of the reference signal (TB) in an interface module (TCI) of each terminal station, and
- application to the reference signal (TB) in the terminal station of a compensating delay adapted to said hold time slot.

3. Method according to claim 1, ***characterised in that*** it comprises:
- direct detection of the reference signal (TB) and transmission of a frame (TB1) to the terminal station through the transmission network (L, RFi);
- measurement of a difference in time separating the detection of the reference signal (TB) by the multi-tasking controlling means of the central station (CCU) and effective transmission thereof over the transmission network (L, RFi);
- transmission of the value of this difference in time in the form of a second coded signal (TB2), and
- application to the reference signal (TB) in the terminal station of a compensating delay adjusted as a function of this difference in time to conform to said hold time slot.

4. Method according to one of the preceding claims, ***characterised in that*** said terminal station is a local station (RRS).

5. Method according to one of the preceding claims, ***characterised in that*** said terminal station is a local unit (RTU) .

6. Method according to one of the preceding claims, ***characterised in that*** the transmission network (L, RFi) is a standard local area network (LAN) operating according to a particular transmission protocol.

7. System of transmission for interlinking by transmission channels the elements of a seismic device comprising local units (RTU) for acquisition, processing and transmission of seismic data, a central station (CCU) for control and recording and at least one local station for controlling and concentration (RRS), the elements of the device being provided with multi-tasking controlling means, the system permitting precise synchronisation of the local units (RTU) with a reference signal (TB) transmitted by the central station (CCU), ***characterised in that*** it comprises.
- a transmission network (L, RFi) for interconnecting the central station (CCU) and at least one terminal station (RTU, RRS) comprising at least one transmission channel the transmission time of which is known, associated with interface modules (NCI) in the central station and each terminal station, adapted to conform to a particular transmission protocol;
- means for measurement of the transit time of the data over each of the transmission channels between the central station (SCC) and the acquisition units (RTU);
- means for pre-initiation of the acquisition of the seismic data by the acquisition units (RTU), with a hold time slot in relation to the moment of reception of the reference signal (TB) which is fixed and greater than the transit time, and
- means for application to the reference signal of a delay adjusted to take account of the fluctuations in the effective transfer time associated with its passage through said multi-tasking controlling means and the transmission network (L, RFi) and adapted as a function of the effective capacity of each transmission channel used.

8. System according to claim 7, ***characterised in that*** it comprises an interface unit (TBG/I) in the central station (CCU) for generating a coded signal representative of the reference signal directly over a transmission channel to each local station (RRS), an interface unit (TBD/I) for decoding said coded signal, counting means (D-CPT) for application of a given delay to the decoded signal, this delay depending on the effective capacity of the transmission channel used for transfer of the reference signal, and a generator (SYNCTB-G) for generating a signal (SYNCTB) synchronised with the delayed signal to the acquisition units (RTU).

9. System according to claim 7, ***characterised in that*** it comprises in the central station (CCU) a monitor for interruptions (IT-C), software means for controlling the transmission of a first frame (TB1) characteristic of the reference signal in order to measure an interval separating the detection of the reference signal and the effective transmission of said frame over a transmission channel of the transmission network (L, RFi) and to transmit a second frame (TB2) indicative of the duration of this interval of time, and, in each local station (RRS), an interface unit (TBD/I) to decode said frames (TB1, TB2), counting means (D-CPT) for application of a delay to the decoded signal, a generator (SYNCTB-G) for generating a signal (SYNCTB) synchronised with the delayed signal to the acquisition units (RTU), and software means for controlling the application through the intermediary of the counting means (D-CPT) of a delay depending on the measured interval and the effective capacity of the transmission channel used for transfer of the reference signal.

10. System according to one of claims 7 to 9, ***characterised in that*** said terminal station is a local station (RRS).

11. System according to one of claims 7 to 9, ***characterised in that*** said terminal station is a local unit (RTU).

12. System according to one of claims 7 to 11, ***characterised in that*** the transmission network (L, RFi) is a standard local area network (LAN) operating according to a particular transmission protocol.
